Europäisches Patentamt

European Patent Office

Office européen des brevets

(19)

(11) Numéro de publication: **0 003 931**
**B1**

(12) **FASCICULE DE BREVET EUROPEEN**

(45) Date de publication du fascicule de brevet: **04.11.81**

(21) Numéro de dépôt: **79400091.9**

(22) Date de dépôt: **12.02.79**

(51) Int. Cl.³: **B 65 D 90/00** //G21C13/02

(54) Dispositif de fixation d'une enceinte sur un radier horizontal.

(30) Priorité: **17.02.78 FR 7804577**

(43) Date de publication de la demande:
**05.09.79 Bulletin 79/18**

(45) Mention de la délivrance du brevet:
**04.11.81 Bulletin 81/44**

(84) Etats Contractants Désignés:
**DE GB IT**

(56) Documents cités:
**DE - C - 333 027**
**FR - A - 1 336 804**
**FR - A - 2 277 414**
**GB - A - 630 748**
**GB - A - 1 005 285**
**US - A - 2 289 604**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Leclou André
54, rue Lamartine
F-78470 Saint Remy Les Chevreuse (FR)**

(74) Mandataire: **Mongredien, André et al,
c/o Brevatome 25, rue de Ponthieu
F-75008 Paris (FR)**

Courier Press, Leamington Spa, England.

Dispositif de fixation d'une enceinte sur un radier horizontal.

La présente invention a pour objet un dispositif de fixation d'une enceinte dans un radier horizontal.

De façon plus précise, la présente invention concerne un dispositif qui permet de fixer, par son extrémité inférieure, une enceinte étanche de préférence réalisée en métal et munie d'un fond plat dans un radier, de préférence réalisé en béton, ce radier comportant une partie centrale pour supporter le fond plat de cette enceinte et une partie annulaire pour recevoir une partie du dispositif de fixation.

De façon encore plus précise, la présente invention concerne un tel dispositif qui permet d'assurer une liaison entre le radier et l'enceinte tout en permettant des variations de dimensions de cette enceinte, sous l'action par exemple d'une pression interne ou de dilatations thermiques sans que l'on introduise des contraintes excessives dans les différentes parties de l'enceinte ou du dispositif de fixation.

De telles enceintes peuvent être utilisées en particulier dans le domaine nucléaire comme enceintes de confinement. Ces enceintes doivent pouvoir supporter, en cas d'incident, une pression interne relativement élevée. En outre, la liaison entre cette enceinte et le radier sur lequel elle est fixée doit pouvoir supporter des accélérations dues à des secousses sismiques, sans qu'il intervienne bien entendu de dégradations de ce dispositif de fixation. En outre, ce dispositif de fixation doit assurer que la totalité des efforts ou des déformations se trouve transmise aux parois de l'enceinte et non au fond plat qui doit rester rigoureusement plan.

Dans le brevet français n° 1 336 804, déposé le 24 juillet 1962 au nom de la demanderesse, on a déjà décrit un dispositif de liaison plus particulièrement applicable à la solidarisation d'une enceinte sur un radier d'ancrage. Pour mieux comprendre les problèmes que pose cette liaison, on a représenté sur la fig. 1 une vue en coupe verticale d'un dispositif de fixation d'une enceinte selon le brevet déjà cité. L'enceinte 2 est limitée par une paroi latérale cylindrique 4, par un fond plat 6 soudé sur cette paroi latérale et par un couvercle bombé 8 également soudé sur la paroi latérale 4. Cette enceinte comporte éventuellement des buses de raccordement telles que 10. Cette enceinte 2 est fixée sur un radier en béton par exemple, mais ce pourrait être un sol en terre, en terre plus sable, etc. . . . portant la référence 12 par l'intermédiaire d'un dispositif de fixation. Ce dispositif de fixation consiste en un certain nombre de tirants tels que 14 dont l'extrémité inférieure 16 est ancrée dans la masse du radier 12 et dont l'autre extrémité est filetée, cette extrémité portant la référence 18. L'enceinte 2 est prolongée par une virole cylindrique 20 comportant sur sa périphérie un certain nombre d'ouvertures telles que 22 laissant la place pour un organe de fixation solidaire de l'extrémité supérieure filetée des différents tirants 14. L'extrémité inférieure de la virole 20 est soudée sur un rebord annulaire horizontal 24 qui est percé d'alésages permettant le passage de la partie filetée 18 des tirants 14. La fixation de l'enceinte 2 sur le radier 12 est assurée par la coopération des tirants 14 avec des écrous tels que 26 qui coopèrent avec les parties filetées 18 des tirants 14. Le fond plat 6 de l'enceinte 2 repose sur la partie centrale 28 du radier 12.

Ce dispositif de fixation permet d'éviter le soulèvement de l'enceinte 2 lors de la mise sous pression accidentelle de cette enceinte. Cette solution au problème posé, qui présente de nombreux avantages a cependant un inconvénient qui réside dans les efforts ou contraintes internes qui sont appliqués à l'ensemble de la structure lorsque, du fait de la pression ou du fait de secousses sismiques, des efforts sont appliqués à celle-ci. On comprend, en particulier, que les organes de fixation, constitués par les tirants 14, agissant sur le rebord annulaire 24 qui est lui-même soudé sur la virole 20 prolongeant l'enceinte, font que ces efforts qui sont relativement importants prennent naissance essentiellement au niveau de la fixation de la virole de prolongement dans le radier. Ces efforts, comme on l'a déjà indiqué, peuvent provenir soit d'une mise sous pression accidentelle de l'enceinte 2, soit de secousses sismiques appliquées à la structure, soit d'autres actions mécaniques. En outre, il est nécessaire de pratiquer des ouvertures dans la virole ce qui affaiblit la structure mécanique.

La présente invention a précisément pour objet, un dispositif de fixation d'une enceinte du type décrit ci-dessus sur un radier ayant également la structure déjà décrite qui permet de diminuer très sensiblement les contraintes appliquées à l'ensemble de l'enceinte sous l'effet de sollicitations mécaniques et, en particulier, de diminuer ces contraintes au niveau de la solidarisation entre la virole de prolongement et le radier.

Le dispositif de fixation se caractérise en ce qu'il comprend $n$ orifices ménagés à l'extrémité inférieure de la paroi latérale de ladite enceinte et régulièrement espacés sur sa périphérie, et $n$ éléments de fixation, chaque élément de fixation étant constitué par un axe horizontal traversant un desdits orifices et ayant une extrémité intérieure à ladite enceinte et une extrémité extérieure à ladite enceinte et par deux ensembles identiques d'ancrage dans ledit radier, chacun desdits ensembles comportant une extrémité supérieure et une extrémité inférieure, ladite extrémité supérieure agissant sur une des extrémités dudit axe, ladite extrémité inférieure étant ancrée dans ledit radier, ledit axe étant muni de moyens d'immobilisation en translation par rapport audit orifice.

De toute façon, l'invention sera mieux comprise à la lecture de la description qui suit de plusieurs modes de réalisation de l'invention, donnés à titre d'exemples non limitatifs. La description se réfère aux figures annexées, sur lesquelles on a représenté:

— sur la fig. 1, déjà décrite, une vue en coupe verticale d'une enceinte fixée sur son radier par un dispositif selon l'art antérieur,

— sur la fig. 2, un premier mode simplifié de réalisation du dispositif de fixation objet de l'invention,

— sur la fig. 3, un mode par bague de fixation de l'enceinte sur le radier,

— sur les fig. 4 et 5, des vues illustrant un mode de fixation de l'enceinte par l'intermédiaire de dispositifs à palonnier, la fig. 4 représentant plus précisément une coupe verticale d'un élément de fixation, la fig. 5 représentant une vue en élévation de ce dispositif de fixation à palonnier, et

— sur la fig. 6, un exemple de réalisation d'un élément de fixation intervenant dans le dispositif, cet élément de fixation faisant intervenir un système rotulant.

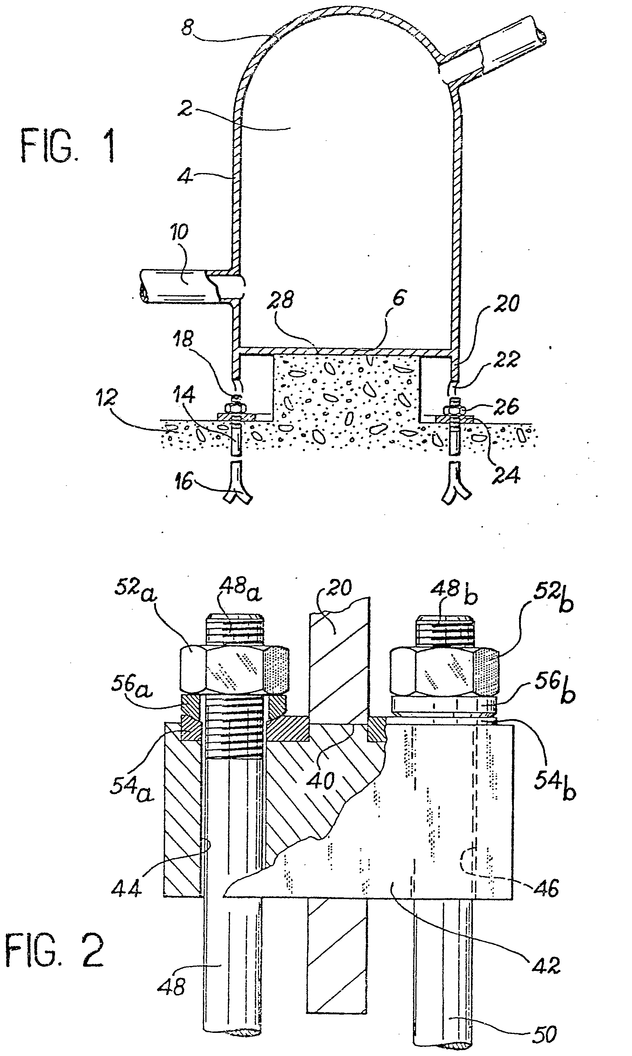

Comme on l'a déjà indiqué, la présente invention concerne un dispositif de fixation sur un radier d'une enceinte du type représenté sur la fig. 1 et donc déjà décrit. Ce dispositif de fixation consiste essentiellement en un certain nombre d'éléments de fixation qui, dans un même mode de réalisation, sont tous identiques et régulièrement répartis sur la périphérie sur la virole inférieure 20. En conséquence, il n'est pas nécessaire de représenter à nouveau l'ensemble de l'installation. Comme on l'a déjà indiqué, dans tous les modes de réalisation, les ensembles de solidarisation comportent un axe à axe horizontal qui traverse un alésage ménagé dans la virole inférieure 20 prolongeant l'enceinte, cet axe étant rendu solidaire du radier 12 par des tiges filetées. Les divers modes de mise en oeuvre de l'invention diffèrent les uns des autres par la liaison qui existe entre ces axes à axe horizontal et la virole inférieure 20 et, d'autre part, par la liaison entre les tiges filetées de fixation et l'axe horizontal.

Dans tous les modes de réalisation, l'extrémité inférieure (portant la référence 16 sur la fig. 1) des tiges, barres ou autres méplats de fixation est ancrée dans la radier 12. En conséquence, sur les différentes figures représentant les divers modes de mise en oeuvre, on ne représentera que l'extrémité supérieure filetée des tiges ou des barres de fixation qui présentent seules une originalité.

La fig. 2 représente le mode de réalisation le plus simple. Comme on l'a déjà indiqué, la virole 20 est munie, à son extrémité inférieure, d'un alésage 40 pour chacun des ensembles de fixation. Cet alésage 40 est traversé par un axe 42 qui débouche de part et d'autre de la virole 20. Cet axe 42 est lui-même pourvu de deux alésages verticaux 44 et 46 permettant le passage de deux tirants 48 et 50 dont les extrémités supérieures 48a et 48b sont filetées, leurs extrémités inférieures étant ancrées dans le radier 12. La solidarisation de l'axe 42 avec le radier est assurée, comme on l'a déjà indiqué, par les tirants 48 et 50, et plus précisément, par la coopération des tirants avec les écrous 52a et 52b. Les clavettes 54a et 54b ont d'une part pour fonction d'immobiliser en translation horizontale l'axe 42 et d'autre part, de constituer une portée pour les rondelles cylindriques 56 et 56' interposées entre les écrous 52 et 54. On comprend que l'interposition des rondelles en calottes sphériques 56a et 56b pour chaque ensemble de fixation permet d'assurer un serrage correct des axes 42 sur le radier même si la verticalité des tirants 48 et 50 n'est pas rigoureuse.

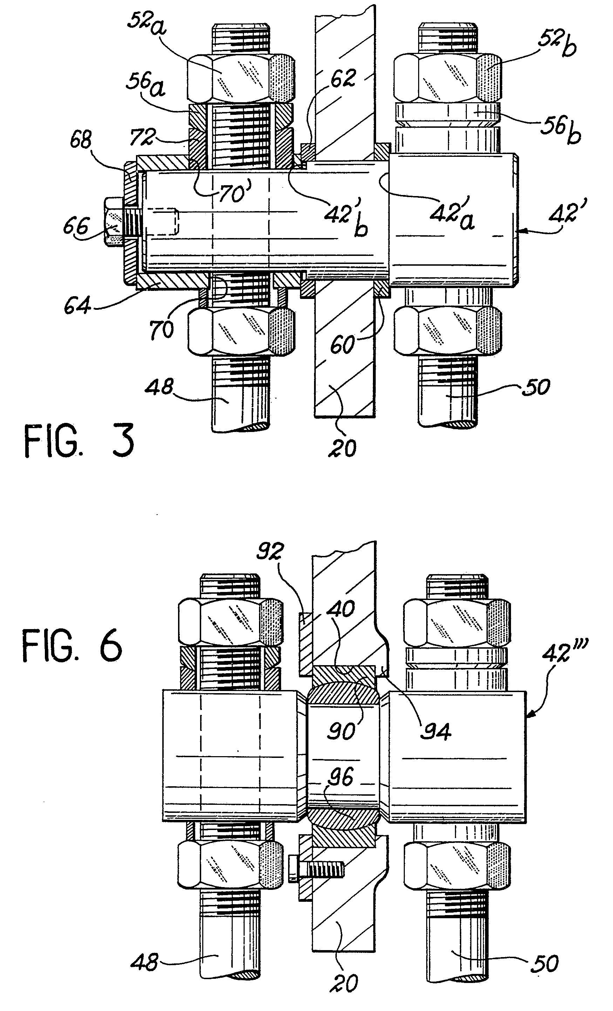

Sur la fig. 3, on a représenté une première variante de réalisation de l'élément de fixation de la fig. 2, seul le système d'immobilisation en translation de l'axe étant changé. L'axe 42' comporte deux épaulements 42'a et 42'b. Des bagues 60 et 62 sont disposées autour de l'axe 42 de part et d'autre de l'alésage 40, la bague 60 prenant appui sur l'épaulement 42'a. Du côté extérieur à l'enceinte, l'axe 42' est entouré par un manchon 64. L'immobilisation en translation de l'axe 42' est assurée par la vis 66 et la plaque 68. Celle-ci appuie sur une extrémité du manchon 64 dont l'autre extrémité est appliquée sur la bague 62. Bien entendu, le manchon 64 est percé de deux orifices 70 et 70' pour laisser passer le tirant 48. De plus, une entretoise annulaire 72 entourant le tirant 48 est interposée entre l'axe 42 et la rondelle en calotte sphérique 56a pour servir de siège à cette dernière.

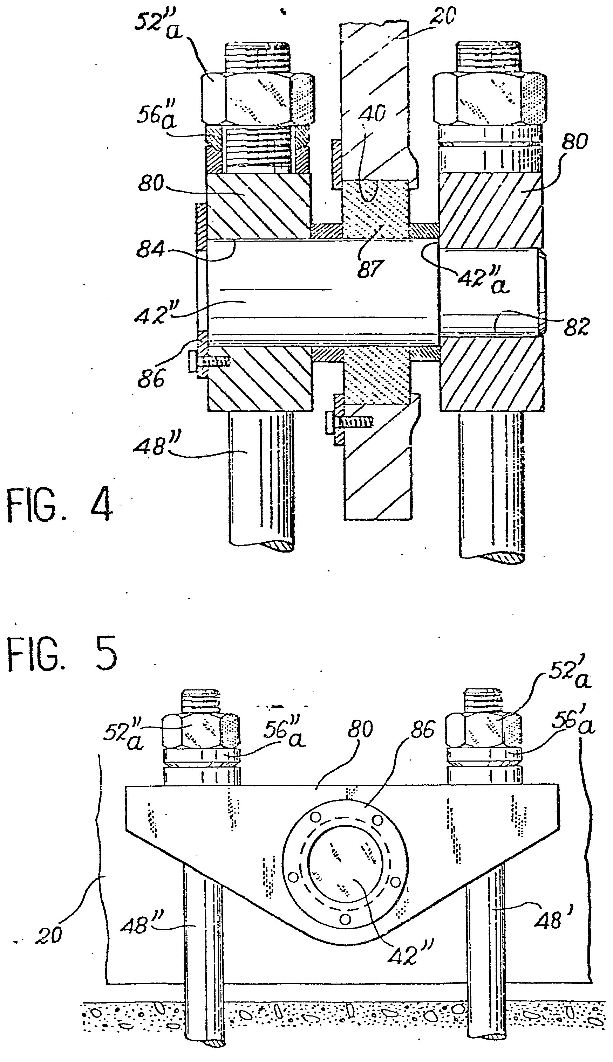

Selon le mode de réalisation représenté sur les fig. 4 et 5, l'axe 42" est monté en palonnier. Pour cela on trouve de chaque côté de la paroi deux dispositifs identiques constitués chacun par une traverse 80 ancrée dans le sol par deux tirants 48' et 48" associés à des écrous 52"a et 52'a et à des rondelles en calotte sphérique 56'a et 56"a. L'axe 42" est monté tour illonnant à ses deux extrémités dans des alésages 82 et 84 ménagés dans les traverses 80. L'axe est immobilisé en translation par l'épaulement 42"a et par la bague d'arrêt 86. L'axe est monté dans l'alésage 40 par l'intermédiaire de la bague 87.

Selon le mode de réalisation de la fig. 6, l'axe 42''' est monté rotulant dans l'alésage 40 de la paroi de la virole 20. Pour cela l'alésage 40 est muni intérieurement d'un coussinet 90 immobilisé en translation (bague 92 et épaulement 94). L'axe lui-même comporte dans sa partie engagée dans l'alésage 40 une bague externe 96 dont la surface externe constitue une rotule coopérant avec le coussinet 90. La bague 90 est immobilisée en translation par des épaulements ménagés dans l'axe 42'''. L'axe 42''' est rendu solidaire du radier par des tirants 48 identiques à ceux de la fig. 3.

En outre, il faut préciser que le fond 6 comporte des aménagements spéciaux pour permettre le serrage des écrous intérieurs, c'est-à-dire des écrous 52b et 52'b et 52"b. Ces aménagements consistent en un orifice ménagé au-dessus de chaque écrou, ces orifices étant ultérieurement obturés par des plaques vissées après le serrage des écrous.

## Revendications

1. Dispositif de fixation d'une enceinte (2) cylindrique à axe vertical sur un radier, (12), caractérisé en ce qu'il comprend *n* alésages ménagés à l'extrémité inférieure de la paroi latérale de ladite enceinte, et répartis sur sa périphérie, et *n* éléments de fixation, chaque élément de fixation étant constitué par un axe horizontal (42, 42', 42", 42''') traversant un desdits alésages (40), et ayant une extrémité intérieure à ladite enceinte (2) et une extrémité extérieure à ladite enceinte (2) et par deux ensembles identiques d'ancrage dans ledit radier (12), chacun desdits ensembles comportant une extrémité supérieure et une extrémité inférieure, ladite extrémité supérieure agissant sur une des extrémités dudit axe (42, 42', 42", 42'''), ladite extrémité inférieure étant ancrée dans ledit radier (12), ledit axe (42, 42', 42", 42''') étant muni de moyens d'immobilisation en translation (54a, 54b, 42'a, 42'b, 60, 62, 64, 66, 68, 86, 92, 94) par rapport audit alésage (40).

2. Dispositif selon la revendication 1, caractérisé en ce que chaque ensemble d'ancrage comprend un tirant (48, 50, 48', 48") à axe vertical, dont l'extrémité inférieure est ancrée dans ledit radier (12) et dont l'extrémité supérieure (48a, 48b) est filetée et traverse un alésage (44) ménagé à l'une des extrémité dudit axe (42, 42', 42", 42'''), et un écrou (52a, 52b, 52'a, 52"a) coopérant avec ladite partie filetée, ledit écrou étant appliqué sur ledit axe (42, 42', 42", 42''') par l'intermédiaire d'une rondelle (56a, 56b, 56'a, 56"a) en forme de calotte sphérique.

3. Dispositif selon la revendication 1, caractérisé en ce que chaque élément d'ancrage est constitué par un palonnier formé par deux tirants (48', 48") ancrés dans ledit radier (12) et par une traverse (80) dans laquelle est montée tourillonnante une des extrémités dudit axe horizontal (42").

4. Dispositif selon l'une quelconque des revendications 2 et 3, caractérisé en ce que ledit axe horizontal (42, 42', 42", 42''') est monté rotulant à l'intérieur de l'alésage (40) ménagé dans ladite paroi latérale de la virole (20).

## Patentansprüche

1. Vorrichtung zur Befestigung eines zylindrischen Behälters (2) mit senkrechter Achse auf einem Fundament (12), gekennzeichnet durch n an seinem Umfang verteilte Bohrungen am unteren Ende der Seitenwand des Behälters und durch n Befestigungselemente, wobei jedes Element besteht aus: einer waagerechten Achse (42, 42', 42", 42'''), die eine der Bohrungen (40) durchquert und ein innerhalb des Behälters (2) gelegenes Ende sowie ein ausserhalb des Behälters (2) gelegenes Ende aufweist, und aus zwei identischen Anordnungen zur Verankerung im Fundament (12), wobei jede der Anordnungen ein oberes Ende und ein unteres Ende aufweist, das obere Ende auf eines der Enden der Achse (42, 42', 42", 42''') wirkt, das untere Ende im Fundament (12) verankert ist und die Achse (42, 42', 42''') mit einer Einrichtung (54a, 54b, 42'a, 42'b, 60, 62, 64, 66, 68, 86, 92, 94) zur Festlegung gegen Verschiebung bezüglich der Bohrung (40) versehen ist.

2. Vorrichtung nach Anspruch 1, dadurch gekennzeichnet, dass jede Verankerungsanordnung aufweist: einen Zugstab (48, 50, 48', 48") mit senkrechter Achse, dessen unteres Ende im Fundament (12) verankert ist und dessen oberes Ende (48a, 48b) mit Gewinde versehen ist und eine Bohrung (44) an einem der Enden der Achse (42, 42', 42", 42''') durchquert, und eine Mutter (52a, 52b, 52'a, 52"a) die mit dem Gewindeteil zusammenarbeitet und die auf die Achse (42, 42', 42", 42''') unter Zwischenschaltung einer kugelkalottenförmigen Scheibe (56a, 56b, 56'a, 56"a) aufgebracht ist.

3. Vorrichtung nach Anspruch 1, dadurch gekennzeichnet, dass jedes Verankerungselement gebildet ist: aus einem durch zwei im Fundament (12) verankerte Zugstäbe (48', 48") gebildete Gestänge und aus einer Traverse (80), in der eines der Enden der waagerechten Achse (42") drehbar befestigt ist.

4. Vorrichtung nach Anspruch 2 oder 3, dadurch gekennzeichnet, dass die waagerechte Achse (42, 42', 42", 42''') innerhalb der Bohrung (40) innerhalb der ersten Seitenwand des Mantels (20) drehbar befestigt ist.

## Claims

1. A device for anchoring a cylindrical vessel having a vertical axis in a foundation raft, wherein said device comprises *n* orifices formed at the lower end of the lateral wall of said vessel and uniformly spaced along its periphery and *n* mounting elements, each mounting element being constituted by a horizontal cross-pin (42, 42', 42", 42''') extending through one of said orifices (40) so that one end of said element is located inside said vessel (2) and the other end is located outside said vessel (2) and by two identical assemblies for anchoring said vessel in said raft (12), each anchoring assembly being constituted by an upper end and a lower end, said upper end being intended to act on one of the ends of said cross-pin (42, 42', 42", 42'''), said lower end being anchored in said foundation raft (12), said cross-pin (42, 42', 42", 42''') being provided with means (54a, 54b, 42'a, 42'b, 60, 62, 64, 66, 68, 86, 92, 94) for translational locking with respect to said orifice (40).

2. A device according to claim 1, wherein each anchoring assembly comprises an anchor-bolt (48, 48′, 48″, 50) having a vertical axis and the lower end of which is anchored in said foundation raft (12) whilst the upper end (48a, 48b) is threaded and passes through a bore (44) formed in one of said cross-pin (42, 42′, 42″, 42‴) and a nut (52a, 52b, 52′a, 52″a) adapted to cooperate with said threaded portion, said nut being applied against said cross-pin (42, 42′, 42″, 42‴) by means of a domed washer (56a, 56b, 56′a, 56″a).

3. A device according to claim 1, wherein each anchoring element is constituted by a rocker-arm system formed by two tie-bolts (48′, 48″) anchored in said foundation raft (12), and by a cross member (80) in which one end of said horizontal cross-pin (42″) is rotatably mounted.

4. A device according to claim 2 or claim 3, wherein said horizontal cross-pin (42, 42′, 42″, 42‴) is rotatably mounted within the interior of the orifice (40) formed in said lateral wall of the cylindrical skirt (20).

FIG. 1

FIG. 2

FIG. 3

FIG. 6

FIG. 4

FIG. 5